# EUROPEAN PATENT APPLICATION

(11) **EP 4 683 150 A1**
(43) Date of publication of application: **21.01.2026**
(21) Application number: 24188875.9
(22) Date of filing: 16.07.2024
(51) Int. Cl.: H02H 3/087, H02H 7/16, H02H 7/18, H02J 3/18, H02H 3/02, H02H 9/02, H02H 7/26

(54) **PROTECTION ARRANGEMENT FOR AN ENERGY STORAGE SYSTEM**

(71) Applicant: Hitachi Energy Ltd, 8050 Zürich (CH)
(72) Inventor: Zhang, Zichi, 72358 Västerås (SE); Bai, Haofeng, 72348 Västerås (SE); Soderblom, Anton, 74943 Enköping (SE); Zhang, Hongyang, 11524 Stockholm (SE)
(74) Representative: AWA Sweden AB

(57) **Abstract**

There is disclosed herein an energy storage system, ESS, (100) adapted for incorporation with a medium-voltage static compensator (STATCOM), the ESS comprising a plurality of strings electrically connected in parallel, each string comprising one or more electrical energy storage units (104) electrically connected in series. At least one string comprises a protection arrangement (102a-c, 106), the protection arrangement comprising a contactor (106) arranged in series with the one or more electrical energy storage units, configured to interrupt current flow through the string during a fault response, and a disconnector switch (102a-c) arranged in series with the one or more electrical energy storage units, configured to open after the contactor has interrupted current flow through the string. The contactor has a voltage rating substantially less than the total string voltage; and the disconnector switch has a voltage rating at least substantially similar to the total string voltage. There is further disclosed herein a STATCOM device connected to such an ESS, and a method for controlling such an ESS.

Fig. 1

## Description

### Technical Field

The present disclosure relates to energy storage systems for power grid transmission implementations. More particularly, the present disclosure relates to a protection arrangement for an energy storage system.

### Background

Energy storage systems (ESSs) are systems for storing electrical energy in bulk. The electrical energy may have been generated by intermittent generating means and, thus, ESSs conveniently provide a way to store generated electrical energy for later use, as desired, even if the generating means themselves are offline. As such, ESSs may form an important part of a renewable energy distribution grid comprising, for example, solar or wind generation.

ESS systems can store excess energy during periods of low demand and release it during high-demand periods, ensuring grid stability and efficient resource utilization. While various energy storage technologies, including lithium-ion batteries, supercapacitors, have made significant advancements, the operation and protection of ESS systems still poses some challenges.

Static (synchronous) compensator (STATCOM) devices have been implemented with ESS systems so as to provide dynamic grid support and stability, especially in power grids with high levels of penetration of renewable sources. An ESS incorporated with a STATCOM may be referred to as an E-STATCOM system.

### Summary

Modern E-STATCOM systems incorporated into power grids may operate at medium to high voltage levels with DC levels in excess of 40 kV or 50 kV or more. Therefore, conventional protection devices may not be scaled to such high voltage levels without a disadvantageously commensurate increase in size, cost, and complexity. Currently, suitable protection devices for medium voltage (MV) DC switchgear and fuses do not exist. Aspects of the present disclosure are therefore directed to enabling the protection of MV systems in a simple, space- and cost-effective manner.

Thus, according to an aspect of the present disclosure, there is provided an energy storage system (ESS) adapted for incorporation with a medium-voltage static compensator (STATCOM). The ESS comprises a plurality of strings electrically connected in parallel, where each string comprises one or more electrical energy storage units electrically connected in series. The energy storage unit(s) may comprise a supercapacitor and/or a battery. Preferably, energy storage units of a same type may be grouped together on a same string.

At least one string, preferably each string, comprises a protection arrangement, which may be used to remove the string from the ESS. The removal of the string may comprise disconnecting the string of energy storage units from the rest of the ESS, and may be triggered by an automatic or manual fault response, or for some other reason. With the string disconnected, other strings may still be connected and charged and discharged as usual such that the ESS can continue its operations.

The protection arrangement comprises a contactor arranged in series with the one or more electrical energy storage units, configured to interrupt current flow through the string during a fault response (or otherwise), and a disconnector switch (which may also be referred to as simply a 'disconnector') arranged in series with the one or more electrical energy storage units, configured to open after the contactor has interrupted current flow through the string. Preferably, the disconnector opens when the current has dropped to substantially zero, so as to prevent arcing and/or damage to the disconnector, hence allowing a safe operation.

According to a particularly advantageous aspect of the present disclosure, the contactor has a voltage rating substantially less than the total string voltage, and the disconnector switch has a voltage rating at least substantially similar to the total string voltage. The total string voltage may be more than 1.5kV (DC), or even more than 35 kV (DC) in medium voltage applications. The contactor however may have a voltage rating less than 15% of the total string voltage, preferably more than 10%. In a specific example, the total string voltage may be 40kV to 50kV (DC), and the contactor may have a voltage rating of 4kV to 5kV.

It is realized as a part of the present disclosure that, by pairing a contactor with a disconnector as described above, the contactor may be substantially derated relative to the total string voltage. During an operation of the protection arrangement, the contactor may open to interrupt the current, and the current may then drop to substantially zero, at which point the disconnector (which is rated for substantially the total string voltage) can safely open and thereby disconnect the string from the ESS. An initially high arc voltage may briefly persist across the contactor upon opening. As realized as a part of the present disclosure, the voltage stress experienced by the contactor, between its opening and the subsequent opening of the disconnector, may not significantly exceed a fraction of the total string voltage, and hence the contactor can be advantageously substantially derated relative to the total string voltage without loss of protection offered by the protection arrangement.

The disconnectors in each string are configured to provide a reliable galvanic insulation after the opening of contactors, but are not required to respond as quickly as the contactors, and hence the complexity and cost of the disconnectors can be substantially reduced. The contactors may need to respond more quickly that the disconnectors, but can be substantially derated relative to the total string voltage, thereby reducing their complexity and cost. Hence, the contactor may be configured with a faster response time than the disconnector.

In a string with only batteries, battery voltages may increase much slower than supercapacitors, so the voltage stress on the contactor may be even lower. Hence, the voltage rating of the contactor may be further reduced or otherwise tuned, configured, or matched to the expected voltage stress during the protection operation.

The contactor and the disconnector switch may be arranged on either end of the string, such that the one or more electrical energy storage units are connected between the contactor and the disconnector switch. Alternatively, the disconnector and the contactor may be arranged together at the same end of the string, depending on the implementation. The latter arrangement may simplify installation or maintenance of the disconnector and contactor.

In some examples, the string further comprises a fuse arranged in series with the contactor, wherein the fuse has a voltage rating substantially less than the total string voltage, preferably substantially similar to the voltage rating of the contactor. If there is a high current in the string, the contactor may be used to break the nominal current, and the fuse may act as a backup if the current is particularly high, in which case the fuse may blow to thereby interrupt the current through the string.

As an alternative, a circuit breaker may be used alone, or a current limiter may be introduced. That is, the contactor is formed as a circuit breaker, i.e., the contactor and the fuse together may be replaced (functionally) by the circuit breaker. Additionally or alternatively, the current limiter may be installed in the string, configured to limit the current through the contactor. The current limiter may replace the fuse or be installed with the fuse.

The ESS may further comprise one or more main circuit breakers arranged at one or both of the main terminals of the ESS. Put another way, the main circuit breakers may be configured to disconnect the entire ESS, e.g., from its connection to a STATCOM and/or from its connection to a power grid. The main circuit breaker(s) may only be opened in the event of a desire to disconnect the entire ESS, such as during a system-wide failure or fault. These circuit breakers are preferably configured to operate faster than the rest of the contactors/disconnectors/fuses located on each string.

According to an example implementation of the present disclosure, a string or each string comprises a discharge circuit electrically connected across at least one of the one or more electrical energy storage units. The discharge circuit may comprise a resistive element or similar discharge element and a switching arrangement configured to connect the discharge element across the energy storage unit(s). In the event of a fault or failure, it may be desired to render the string safe to perform maintenance on, which may involve de-energizing the energy storage unit(s), and the discharge circuit may be used for such de-energizing purposes, e.g., after the disconnector has been opened. In the event of a serious fault, the entire ESS may be taken offline (for example, using the main circuit breaker(s)) and each string of the ESS may be de-energized using a discharge circuit.

According to another aspect of the present disclosure, there is provided a static compensator (STATCOM) device having incorporated therewith an ESS substantially as described above. An example enhanced-STATCOM (E-STATCOM) system has an energy storage system made of supercapacitors for bidirectional high-power flow and a battery system for bidirectional high energy flow.

A challenge posed for such an E-STATCOM system is the protection for this large-scale DC ESS, because medium level DC switchgear/protection device are rare and typically large and very expensive. The protection arrangement described above, for the ESS, therefore provides an effective and cost-effective solution to fulfill the requirement of energy storage protection.

The ESS according to aspects of the present disclosure may comprise a controller configured to control at least some of the protection capabilities. The controller may be a single unit or distributed, and may be local or remote to the ESS.

The control method for the ESS may generally comprise obtaining a request to initiate a fault response, opening the contactor and, after opening the contactor, opening the disconnector switch in response to the opening of the contactor causing substantially zero current to flow through the string.

In the event of a string disconnection, the contactors and disconnectors in the string may be opened as described above. In the event of a pole-to-pole short circuit, for example, the main circuit breakers may open, and then the contactors and disconnectors in the string may be opened as described above. In the event of a string short circuit, leading to a particular high current, a fuse (if used) may blow/rupture, if opening of the contactors is not enough to interrupt the current, and then the disconnector may be opened. Thus, it can be seen that a plurality of faults and failures of the ESS can be responded to by the space- and cost-effective protection arrangement described herein.

It will be appreciated that, as part of the aforementioned fault responses, a discharge circuit may be implemented to de-energize one or more strings, and/or other actions may be taken, depending on the implementation.

### Brief Description of the Drawings

Embodiments of the present disclosure are described below by way of example with reference to the appended drawings, in which:
Figure 1 schematically shows an energy storage system according an aspect of the present disclosure,
Figure 2 illustrates a method of controlling an energy storage system according to an embodiment of the present disclosure, and
Figure 3 schematically shows a STATCOM device having incorporated therewith an ESS according to an aspect of the present disclosure.

### Detailed Description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided to assist in conveying example implementations, within the scope of the disclosure, to the skilled person.

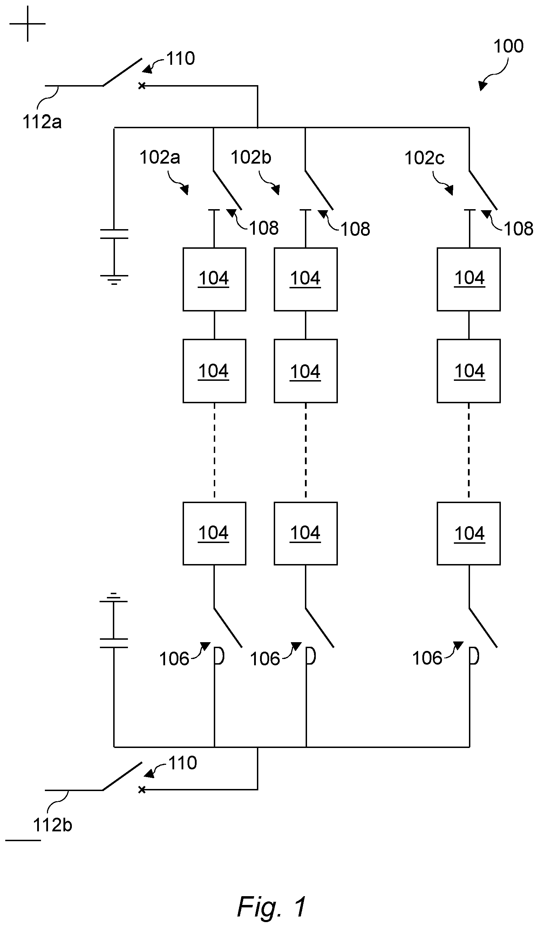

Figure 1 schematically shows an energy storage system (ESS) 100 according to an aspect of the present disclosure. The ESS 100 comprises three strings 102a, 102b, 102c of series-connected energy storage modules 104. The strings 102a, 102b, 102c are connected in parallel and, in this example, further connected to grounding circuitry comprising capacitors to prevent DC current flow.

Although three strings 102a, 102b, 102c are illustrated here, it will be appreciated that, in other examples, fewer or more strings may be provided. However, it is preferred that more than one string is provided, so that a modular and redundant ESS 100 can be achieved.

The energy storage modules 104 may comprise supercapacitors and/or batteries. Preferably, each string 102a, 102b, 102c only comprises one type of energy storage module 104, i.e., only batteries or only supercapacitors, thereby to simplify the protection of the energy storage modules 104.

A protection arrangement is provided to enable the disconnection of one or more strings 102a, 102b, 102c from the ESS 100. For each string 102a, 102b, 102c, in this example, the protection arrangement comprises a contactor 106 and a disconnector switch 108 (which is also referred to as a 'disconnector 108').

Each in string 102a, 102b, 102c, the contactor 106 has a voltage rating substantially lower than the total string voltage. Put another way, the contactor is substantially derated.

The contactor 106 is configured to open in response to a request, such as a fault response or other control request. Preferably, the contactor 106 is configured with a faster response time than the disconnector 108.

The disconnector 108 has a voltage rating substantially similar or equal to the total string voltage. The disconnector 108 in each string 102a, 102b, 102c is used to provide a reliable galvanic insulation after the opening of contactors 106.

In this example, the ESS 100 further comprises circuit breakers 110 arranged across the ESS 100, i.e., at the main terminals 112a, 112b of the ESS 100. The main terminals comprise a positive terminal 112a and a negative terminal 112b and may serve as connection points for the ESS 100. For example, the ESS 100 may be incorporated with a STATCOM device via the main terminals 112a, 112b.

The string(s) 102a, 102b, 102c may further comprise a fuse (not shown) arranged in series with the contactor 106. The fuse may also be substantially derated relative to the total string voltage, as with the contactor 106. The fuse may blow/rupture if the current substantially exceeds that which the contactor 106 can handle, thereby ensuring an interruption in current through the string.

The contactor 106 (and any fuse) may be embodied as a derated circuit breaker. Additionally or alternatively, a current limiter may be installed on the string 102a, 102b, 102c to limit current flow through the contactor 106 (or circuit breaker). The response attributes of the contactor 106 discussed above (e.g., response time) should also be present in any circuit breaker or other component embodying the contactor 106.

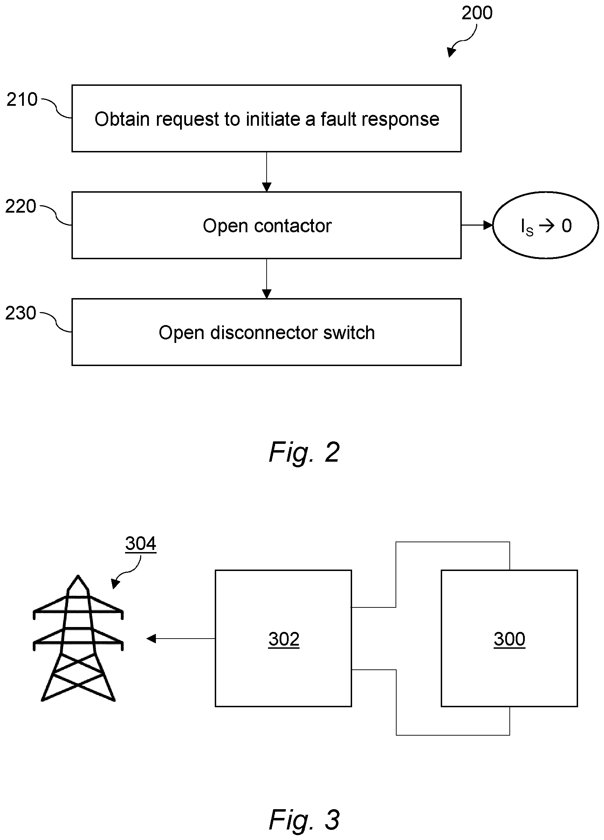

Figure 2 schematically shows a method 200 for controlling an ESS, and the illustrated method 200 is discussed with further reference to the ESS 100 shown in figure 1 to aid in understanding. Although the contactors 106, disconnectors 108, and main circuit breakers 110 are shown open, it will be appreciated that all of these may normally be closed.

The method 200 comprises obtaining 210 a request to initial a fault response. The request may be automatically or manually generated and sent to, e.g., a controller (not shown) for the ESS 100. The reason for the generation of the request may vary and should not limit the present disclosure.

In response to receiving the request, the method 200 further comprises opening 220 the contactor 106, which may preferably be configured for a rapid response to such a request. The opening of the contactor 106 interrupts the current Is in the string 102a (for example), such that Is falls to substantially 0 (zero).

An arc may persist for some transient time across the contactor 106, in some cases. The voltage stress across the contactor 106 may increase over time.

The method 200 then comprises opening the disconnector switch 108, when the current Is in the string 102a is low enough, preferably substantially zero so as to ensure a reliable opening and galvanic isolation by the disconnector switch 108.

The opening of the disconnector 108 may be triggered at the same time as the contactor 106, i.e., also in response to the request to initiate the fault response. Alternatively, the opening of the disconnector 108 may be triggered, e.g., with some fixed or variable time delay, by the opening of the contactor 106. In yet another example, the opening of the disconnector switch 108 may be in response to the string current Is going below a threshold current, e.g., reaching substantially zero.

The contactor 106 may therefore withstand a voltage stress for a period of time before the disconnector 108 opens. During this time - which may be a function of the relative response times of the contactor 106 and the disconnector 108 - it is realized as a part of the present disclosure that the voltage stress will not be comparable to the total string voltage. Instead, the voltage stress will rarely or never exceed 15% of the total string voltage. Hence, the contactor 106 may advantageously have a voltage rating of 15% of the total string voltage, or less.

The ESS 100 may be charged and discharged via the terminals 112a, 112b during its operation, in a manner understood by those skilled in the art. During charging and discharging, in the absence of any faults or failures, each string 102a, 102b, 102c is charged substantially evenly, such that the total string voltage for each string 102a, 102b, 102c is maintained at a substantially similar level. Accordingly, it will be understood that the usual voltage stress across the contactor 106 will correspond to the voltage difference between neighboring strings, which is normally substantially zero.

However, if it is requested that a string 102a is disconnected from the ESS 100 (e.g., due to a fault), and the ESS 100 is charging or discharging at the time, then voltage differences between the string 102a and its neighboring string 102b will arise. It is such voltage differences that may cause the voltage stresses described above.

An example is considered where the ESS 100 is being charged from a starting string voltage of 35kV. At the start of the charging pulse, the string 102a is requested to be disconnected. The contactor 106 of the string 102a is opened, and current flow to the string 102a is interrupted. As a result, the string 102a is not charged. However, the neighboring string 102b continues to charge.

The disconnector 108 in the string 102a is controlled to open once the current in the string 102a has substantially reduced to zero. By the time the disconnector 108 is opened, the string voltage of the neighboring string 102b has risen to 40kV, resulting in a voltage stress across the contactor of 5kV. The contactor 106, although it is derated relative to the total string voltage, can withstand this voltage stress without failure.

With this example in mind, it will be appreciated that the contactors 106 can be substantially derated without loss of reliable protection for the ESS 100, as the voltage stress across the contactor 106 will not approach the total string voltage until the disconnector 108 has been afforded ample time to operate and disconnect the string. Hence, by pairing the contactor 106 with the disconnector 108, a rapid, reliable, yet simple protection arrangement is provided.

Figure 3 schematically shows an E-STATCOM system. The E-STATCOM system comprises a static compensator (STATCOM) device 302 having incorporated therewith an ESS 300. The ESS 300 may be substantially similar to that discussed above in connection with figures 1 and 2. The ESS 300 is connected on a DC side of the STATCOM device 302, which is connected to a power grid 304 and may provide power support or stability to the power grid 304 using energy stored in the ESS 300, for example.

It will be appreciated that the above-described benefits provided for the ESS will propagate as benefits for an E-STATCOM system into which the ESS is incorporated.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the above disclosure, and the appended claims.

## Claims

1. An energy storage system (ESS) adapted for incorporation with a medium-voltage static compensator (STATCOM), the ESS comprising:
a plurality of strings electrically connected in parallel, each string comprising one or more electrical energy storage units electrically connected in series;
wherein at least one string comprises a protection arrangement, the protection arrangement comprising:
a contactor arranged in series with the one or more electrical energy storage units, configured to interrupt current flow through the string during a fault response; and
a disconnector switch arranged in series with the one or more electrical energy storage units, configured to open after the contactor has interrupted current flow through the string;
wherein the contactor has a voltage rating substantially less than the total string voltage; and
wherein the disconnector switch has a voltage rating at least substantially similar to the total string voltage.

2. The ESS according to claim 1, wherein the contactor and the disconnector switch are arranged on either end of the string, such that the one or more electrical energy storage units are connected between the contactor and the disconnector switch.

3. The ESS according to claim 1 or claim 2, further comprising a fuse arranged in series with the contactor, wherein the fuse has a voltage rating substantially less than the total string voltage, preferably substantially similar to the voltage rating of the contactor.

4. The ESS according to claim 1 or claim 2, wherein the contactor is formed as a circuit breaker.

5. The ESS according to any preceding claim, further comprising a current limiter configured to limit the current through the contactor.

6. The ESS according to any preceding claim, further comprising one or more main circuit breakers arranged on one or both main terminals of the ESS.

7. The ESS according to any preceding claim, wherein the one or more electrical energy storage units comprise a supercapacitor and/or a battery.

8. The ESS according to any preceding claim, wherein the total string voltage is more than 35 kilovolts (kV).

9. The ESS according to any preceding claim, wherein the contactor has a voltage rating less than 15% of the total string voltage, and preferably more than 10%.

10. The ESS according to any preceding claim, further comprising a discharge circuit electrically connected across at least one of the one or more electrical energy storage units.

11. A static compensator (STATCOM) device having incorporated therewith an ESS according to any preceding claim.

12. A method for controlling the ESS according to any of claims 1 to 10, comprising:
obtaining a request to initiate a fault response;
opening the contactor; and
after opening the contactor, opening the disconnector switch in response to the opening of the contactor causing substantially zero current to flow through the string.

13. The ESS according to any of claims 1 to 10, further comprising a controller configured to perform the method according to claim 12.
